# EUROPÄISCHE PATENTSCHRIFT

(11) **EP 0 420 947 B1**
(45) Veröffentlichungstag und Bekanntmachung des Hinweises auf die Patenterteilung: **08.09.1993**
(21) Anmeldenummer: 90901808.7
(22) Anmeldetag: 30.01.1990
(51) Int. Cl.: B60T 13/569

(54) **UNTERDRUCK-BREMSKRAFTVERSTÄRKER FÜR KRAFTFAHRZEUGE**
VACUUM BRAKE BOOSTER FOR MOTOR VEHICLES
SERVOFREIN A DEPRESSION POUR VEHICULES A MOTEUR

(30) Priorität: 22.04.1989 DE 3913263
(43) Veröffentlichungstag der Anmeldung: 10.04.1991
(73) Patentinhaber: ITT Automotive Europe GmbH, 60488 Frankfurt (DE)
(72) Erfinder: WAGNER, Wilfried, D-6338 Hüttenberg-Weidenhausen (DE); GRAICHEN, Kai-Michael, D-6070 Langen (DE)
(86) Internationale Anmeldenummer: EP9000163
(87) Internationale Veröffentlichungsnummer: WO9012715

(56) Entgegenhaltungen:
- GB-A- 2 181 805
- US-A- 4 453 450
- US-A- 4 587 889

## Beschreibung

Die Erfindung betrifft einen Unterdruck-Bremskrafverstärker für Kraftfahrzeuge, mit einem Unterdruckgehäuse, das durch eine mit einem pneumatischen Differenzdruck beaufschlagbare axial bewegliche Wand in eine Unterdruckkammer und eine Arbeitskammer dichtend unterteilt ist, wobei die bewegliche Wand durch einen metallischen Membranteller und eine daran anliegende Rollmembran gebildet ist, sowie mit einem mechanisch betätigbaren Steuerventil zur Verbindung der Arbeitskammer mit der Unterdruckkammer bzw. mit der Atmosphäre, dessen axial bewegliches Steuerventilgehäuse aus thermoplastischem Kunststoff ausgebildet ist und eine Abstützfläche für den radial innenliegenden Bereich des Membrantellers sowie eine radiale Nut aufweist, die den radial innenliegenden Bereich der Rollmembran aufnimmt (siehe GB-A-2 181 805).

Ein vergleichbarer Bremskraftverstärker bzw. die Art der Befestigung dessen beweglichen Wand am Steuerventilgehäuse ist aus der prioritätsälteren DE-Patentanmeldung P 38 13 144.7 der Anmelderin (veröffentlicht am 2.11.89) bekannt. Der darin offenbarte Membranteller weist in seinem radial innenliegenden Bereich eine umlaufende Wölbung auf, die auf einer am Steuerventilgehäuse ausgebildeten rechtwinkligen Auflagefläche aufliegt, so daß bei einer Druckbelastung der beweglichen Wand eine Abrollbewegung des Membrantellers stattfinden kann. An die Auflagefläche des Membrantellers schließt eine im Querschnitt rechteckige Nut an, die einen im radial innenliegenden Bereich der Rollmembran entsprechend geformten Wulst aufnimmt.

Bei derartigen bekannten Bremskraftverstärkern besteht jedoch unter bestimmten Betriebsbedingungen die Gefahr eines Ausknöpfens der Rollmembran, die die Funktionssicherheit solcher Bremsgeräte erheblich beeinträchtigt. Diese Gefahr tritt insbesondere infolge von Staudruck im Bremsgerät durch dessen Betätigung ohne Unterdruck bzw. mit verschlossenen Rückschlagventilabgängen, da aufgrund des im Bremskraftverstärkergehäuse herrschenden Druckes in radialer Richtung wirkende Kraftkomponenten entsteht, die versuchen, den Ringwulst der Rollmembran aus der Umfangsnut des Steuerventilgehäuses herauszuziehen bzw. den Membranteller entgegen der Betätigungskraft zu verschieben, so daß der Ringwulst aus der Nut herausgedrückt wird. Dies führt zum Ausfall des Bremsgerätes, dessen Verstärkungskraft nicht mehr aufgebaut werden kann.

Nachteilig sind auch die durch die rechteckige Ausführung der Abstützfläche des Membrantellers sowie der die Rollmembran aufnehmenden Nut hohen Materialspannungen im Steuerventilgehäuse, die unter Umständen zu dessen Zerstörung führen können.

Es ist daher Aufgabe der vorliegenden Erfindung, die vorstehenden Nachteile zu vermeiden und einen Unterdruck-Bremskraftverstärker mit den gattungsgemäßen Merkmalen so auszugestalten, daß unter Beibehaltung der Bauart und der Geräte-Kenndaten dessen Betriebssicherheit bei Verwendung der ohnehin vorhandenen Teile gewährleistet ist.

Die Aufgabe wird erfindungsgemäß durch die kennzeichnenden Merkmale des Anspruchs 1 gelöst.

Durch diese Maßnahmen wird ein besseres Abrollen des Membrantellers am Steuerventilgehäuse bei Übertragung der Verstärkungskraft, eine erhebliche Verringerung der Materialspannungen im Einspannbereich der beweglichen Wand sowie eine wesentliche Vereinfachung der Montage erreicht.

Die Nut weist vorzugsweise in ihrem unterhalb der Abstützfläche des Membrantellers liegenden Bereich eine im Querschnitt kreissegmentförmige Wölbung auf, die mit einer im radial innenliegenden Bereich der Rollmembran ausgebildeten Wölbung zusammenwirkt.

Eine weitere Erhöhung der Betriebssicherheit im Hinblick auf die im Einspannbereich der beweglichen Wand auftretenden Spannungen wird bei einer vorteilhaften Weiterbildung des Erfindungsgegenstandes dadurch erreicht, daß der radial innenliegende Bereich der Rollmembran durch einen axial abstehenden ringförmigen Kragen gebildet ist, der im wesentlichen die gleiche Materialdicke wie der am Membranteller anliegende Teil der Rollmembran aufweist und an seiner dem Membranteller abgewandten Seite einen radialen Bund aufweist, wobei ein Halteelement vorgesehen ist, das eine auf den Kragen radial wirkende Kraft aufbringt.

Das durch einen geschlitzten Ring, eine Wurmfeder oder einen Gummiring, der vorzugsweise an die Rollmembran angegossen werden kann, gebildete Halteelement ist bei einer weiteren Ausgestaltung der Erfindung zwischen dem Bund und dem am innenliegenden Bereich des Membrantellers anliegenden Abschnitt der Rollmembran angeordnet. Dadurch wird erreicht, daß durch die Vorspannung des Halteelementes die Rollmembran zusätzlich zu ihrer eigenen Vorspannung in die Nut gepreßt wird. Der durch diesen Einpreßvorgang erzeugte keilförmige Formschluß verhindert eine axiale Bewegung des Membrantellers gegenüber dem Steuerventilgehäuse.

Weitere Einzelheiten und Vorteile des erfindungsgemäßen Unterdruck-Bremskraftverstärkers ergeben sich aus der nachfolgenden Beschreibung von fünf Ausführungsbeispielen der Erfindung, die anhand der beiliegenden Zeichnung näher erläutert sind, wobei die einander entsprechenden Teile mit den gleichen Bezugszeichen versehen sind.

Es zeigt:
- Fig. 1: einen Teil-Längsschnitt einer ersten Ausführung des Unterdruck-Bremskraftverstärkers nach der Erfindung;
- Fig. 2: die in Fig. 1 gezeigte Einzelheit "A" in vergrößertem Maßstab;
- Fig. 3: eine zweite Ausführungsvariante der Einspannung der beweglichen Wand des erfindungsgemäßen Unterdruck-Bremskraftverstärkers;
- Fig. 4: eine dritte Ausführungsvariante der Einspannung der beweglichen Wand des erfindungsgemäßen Unterdruck-Bremskraftverstärkers;
- Fig. 5: eine vierte Ausführungsvariante der Einspannung der beweglichen Wand des erfindungsgemäßen Unterdruck-Bremskraftverstärkers und
- Fig. 6: eine vorteilhafte Weiterbildung der in Fig. 5 gezeigten Einspannungsvariante.

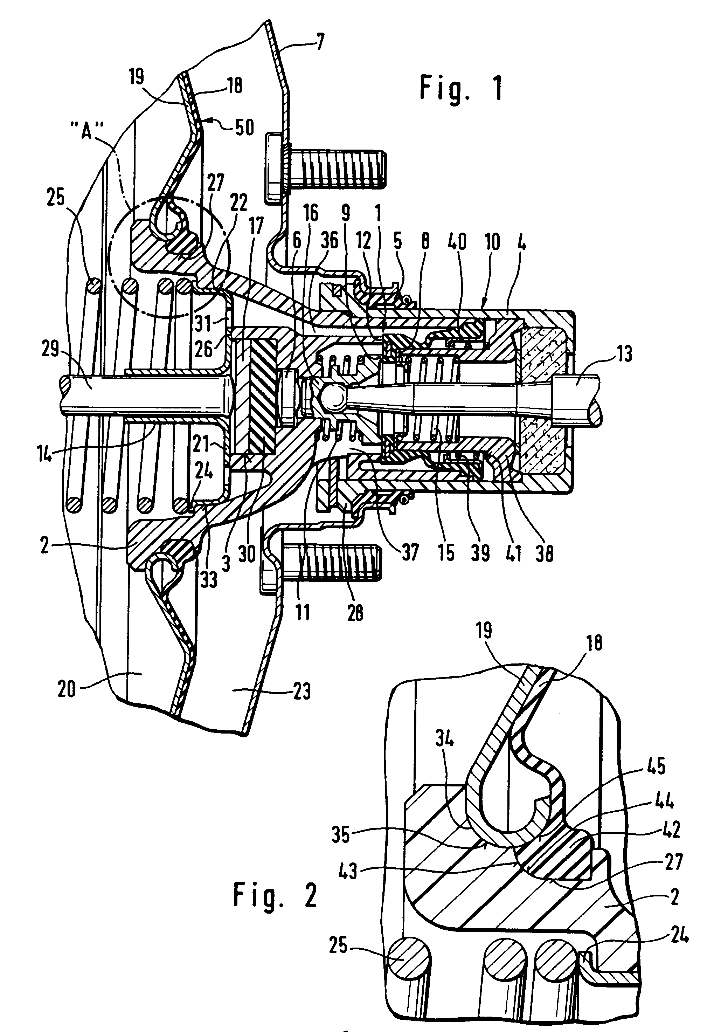

Das Gehäuse des in Fig. 1 gezeigten Unterdruck-Bremskraftverstärkers besteht aus zwei an einer Verbindungsstelle miteinander lancierten Gehäuseteilen, von denen, der besseren Übersichtlichkeit wegen, nur das bremspedalseitige Gehäuseteil 7 teilweise dargestellt ist. Der Innenraum des Gehäuses wird durch eine bewegliche Wand 50 in eine Unterdruckkammer 20, die über einen pneumatischen Anschluß mit einer Unterdruckquelle verbunden ist (nicht näher dargestellt), und eine Arbeitskammer 23 unterteilt.

Die durch einen metallischen Membranteller 19 sowie eine in der Arbeitskammer 23 daran anliegende Rollmembran 18 gebildete bewegliche Wand 50 ist an einem im dargestellten Beispiel zweiteilig ausgeführten Steuerventilgehäuse 10 befestigt. Wie insbesondere der Fig. 2 zu entnehmen ist, weist der Membranteller 19 in seinem radial innenliegenden Bereich eine zur Rollmembran 18 hin gebogene ringförmige Wölbung 34 auf, die sich an einer am Vorderteil 2 des Steuerventilgehäuses 10 ausgebildeten Abstützfläche 35 abstützt, deren Kontur der Wölbung 34 entspricht und die bei Betätigung des Unterdruck-Bremskraftverstärkers eine Abrollbewegung des Membrantellers 19 zuläßt. An die Abstützfläche 35 schließt eine im Vorderteil 2 ausgebildete radiale Nut 27 an, die den radial innenliegenden Bereich der Rollmembran 18, der als ein ringförmiger umlaufender Dichtwulst 42 ausgebildet ist, aufnimmt. Das Steuerventilgehäuse 10 ragt mit seinem zylindrischen Führungsteil 4 aus dem Verstärkergehäuse 7 heraus und wird mittels eines nicht dargestellten Faltenbalges gegen Verschmutzung seiner Oberfläche geschützt. Das Steuerventilgehäuse 10 dichtet mit einem Gleitführungsring 5 die Arbeitskammer 23 nach außen hin ab.

Die Nut 27 ist auf der in Fig. 2 linken Seite durch eine im Querschnitt kreissegmentförmig ausgebildete Krümmung 43 begrenzt, die sich in den Auflagebereich des Membrantellers 19 auf der Abstützfläche 35 hinein erstreckt, wobei der Dichtwulst 42 eine Wölbung 44 aufweist, deren Form der der Krümmung 43 angepaßt ist. An diese Wölbung 44 schließt ein weiterer gekrümmter Abschnitt 45 an, der an der Oberfläche der am Membranteller 19 angeformten Wölbung 34 anliegt.

Im Inneren des Steuerventilgehäuses 10 ist eine aus Kolbenstange 13 und Ventilkolben 16 zusammengesetzte Steuerstange axial verschiebbar angeordnet, die über einen nicht näher dargestellten Gabelkopf mit einem Bremspedal eines Kraftfahrzeuges verbindbar ist. Das Steuerventilgehäuse 10 enthält ferner eine Ventilanordnung 1,9,12, die von dem Ventilkolben 16 betätigt wird und über Kanäle 36,37 die Druckdifferenz zwischen Unterdruckkammer 20 und Arbeitskammer 23 steuert. Das in der Unterdruckkammer 20 angeordnete Vorderteil 2 des Steuerventilgehäuses 10 weist ferner eine Bohrung 3 auf, in der eine Reaktionsscheibe 30 sowie eine Druckplatte 17 angeordnet sind. Eine an der Druckplatte 17 anliegende Druckstange 29 betätigt einen an der Stirnseite des Verstärkergehäuses befestigten, nicht näher dargestellten Hauptbremszylinder.

Zum Zurückstellen des Verstärkerkolbens 19 ist eine Rückstellfeder 25 vorgesehen, die zwischen dem Vorderteil 2 des Steuerventilgehäuses 10 und dem Boden des Verstärkergehäuses eingespannt ist.

Die Steuerbaugruppe des Unterdruck-Bremskraftverstärkers ist in der Lösestellung dargestellt, d. h. in einer Stellung, in der die beiden Kammern 20,23 voneinander getrennt sind. In dieser Stellung liegen nämlich die beiden Dichtsitze 9,12 an der Dichtfläche eines Tellerventils 1 an, daß auf seiner der Dichtfläche abgewandten Seite einen Anschlag 8 aufweist, der über eine Hülse 38 im Führungsteil 4 anschlägt. Das Führungsteil 4 liegt in der Lösestellung mit seinem Kragen 28 am Gleitführungsring 5 an, wobei der Dichtsitz 9 am Steuerventilkolben 16 von einer Kolbenstangenrückholfeder 11 gegen die Dichtfläche des Tellerventils 1 gedrückt wird. Das Tellerventil 1 wird gleichzeitig in Richtung auf die beiden Dichtsitze 9,12 zu mittels einer Druckfeder 15 vorgespannt, die sich mit deren anderem Ende an der Hülse 38 abstützt. Außerdem ist eine zweite Druckfeder 39 vorgesehen, die sich einerseits an einer Führung 40 des Tellerventils 1 und andererseits an einer ringförmigen Fläche 41 der Hülse 38 abstützt und die beiden Steuerventilgehäuseteile 2,4 auseinander hält.

Um eine präzise Führung der Druckstange 29 zu erzielen, ist eine Führungshülse 14 vorgesehen, deren radialer Flansch 21 sich an einer Ringfläche 26 am Steuerventilgehäuse-Vorderteil 2 abstützt und in eine zylindrische Führungsfläche 22 übergeht, und mit einem am Vorderteil 2 ausgebildeten zylindrischen Abschnitt 33 zusammenwirkt, so daß die auf die Druckstange 29 einwirkenden Biegekräfte wirksam aufgenommen werden. Der im Bereich der Mündung des Unterdruckkanals 36 mit mehreren Öffnungen 31 versehene radiale Flansch 21 wird gegen Herausfallen durch die Rückstellfeder 25 gesichert, die sich an einem an die zylindrische Führungsfläche 22 anschließenden radialen Kragen 24 abstützt. Da die Druckstange 29 getrennt von der Druckplatte 17 ausgebildet ist, kann die Führungshülse 14, wie dargestellt, zylindrisch ausgeführt werden.

Die Reaktionsscheibe 30 befindet sich dabei in einem der Unterdruckkammer 20 zugewandten Abschnitt der Stufenbohrung 3, wobei in deren zweitem Abschnitt kleineren Durchmessers eine Übersetzungsscheibe 6 angeordnet ist, die mit dem Steuerventilkolben 16 zusammenwirkt und deren mit der Reaktionsscheibe 30 in Berührung stehende Fläche die Übersetzung des Bremsgerätes bestimmt.

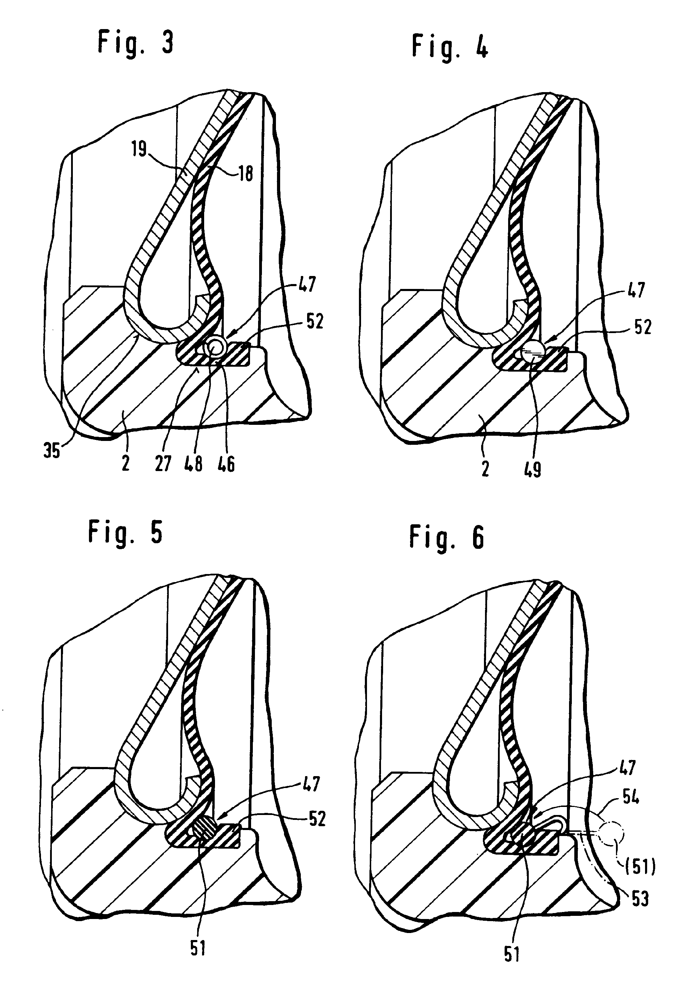

Bei den in den Fig. 3, 4, 5 und 6 gezeigten Ausführungen des Einspannbereiches der beweglichen Wand 50 ist der radial innenliegende Bereich der Rollmembran 18 als ein axial abstehender ringförmiger Kragen 46 ausgebildet, dessen Materialdicke der des am Membranteller 19 anliegenden Teiles der Rollmembran 18 entspricht. Die im radial innenliegenden Bereich der Rollmembran 18 ausgebildete Wölbung 44 ist durch den Übergang zwischen dem Kragen 46 und dem am Membranteller 19 bzw. dessen Wölbung 34 anliegenden Abschnitt 45 gebildet, wobei im keilförmigen Zwischenraum zwischen dem Kragen 46 und dem Abschnitt 45 ein Halteelement 47 angeordnet ist, welches eine auf den Kragen 46 einwirkende Kraftkomponente aufbringt, die die aufgrund der Vorspannung der in der Nut 27 eingespannten Rollmembran 18 entstehende Haltekraft unterstützt. Das als eine Wurmfeder 48 (Fig. 3), ein aus Metall oder Kunststoff hergestellter geschlitzter Ring 49 (Fig. 4) bzw. ein elastischer Gummiring 51 ausgebildete Halteelement 47 ist in seiner Lage durch einen am Kragen 46 ausgebildeten radialen Bund 52 gesichert. Die Ringe 49 und 51 müssen dabei nicht zwangsläufig eine kreisförmige Querschnittsfläche aufweisen, so daß sowohl ein polygon- als auch ein ovalförmig ausgebildeter Querschnitt denkbar ist.

Bei der in Fig. 6 gezeigten Ausführungsform des Erfindungsgegenstandes ist der Gummiring 51 an die Rollmembran 18 angegossen, so daß er mit dem Kragen 46 über einen zylindrischen Bereich 53 geringerer Dicke in Verbindung steht. Wie der Pfeil 54 in Fig. 6 zeigt, wird der zylindrische Bereich 53 bei der Montage umgebogen und der Gummiring 51 in den bereits erwähnten keilförmigen Zwischenraum gepreßt. Der zylindrische Bereich 53 kann auch durch mehrere, gleichmäßig am Umfang verteilte Stege ausgeführt sein.

### Bezugszeichenliste

- 1: Tellerventil
- 2: Vorderteil
- 3: Bohrung
- 4: Führungsteil
- 5: Gleitführungsring
- 6: Übersetzungsscheibe
- 7: Verstärkergehäuseteil
- 8: Anschlagfläche
- 9: Dichtsitz
- 10: Steuerventilgehäuse
- 11: Feder
- 12: Dichtsitz
- 13: Kolbenstange
- 14: Führungshülse
- 15: Feder
- 16: Steuerventilkolben
- 17: Druckplatte
- 18: Rollmembran
- 19: Membranteller
- 20: Unterdruckkammer
- 21: Flansch
- 22: Führungsfläche
- 23: Arbeitskammer
- 24: Kragen
- 25: Rückstellfeder
- 26: Ringfläche
- 27: Nut
- 28: Kragen
- 29: Druckstange
- 30: Reaktionsscheibe
- 31: Öffnung
- 32: -
- 33: Abschnitt
- 34: Wölbung
- 35: Abstützfläche
- 36: Kanal
- 37: Kanal
- 38: Hülse
- 39: Druckfeder
- 40: Führung
- 41: Fläche
- 42: Dichtwulst
- 43: Krümmung
- 44: Wölbung
- 45: Abschnitt
- 46: Kragen
- 47: Halteelement
- 48: Wurmfeder
- 49: Ring
- 50: bewegliche Wand
- 51: Gummiring
- 52: Bund
- 53: Bereich

## Patentansprüche

1. Unterdruck-Bremskraftverstärker für Kraftfahrzeuge, mit einem Unterdruckgehäuse, das durch eine mit einem pneumatischen Differenzdruck beaufschlagbare axial bewegliche Wand (50) in eine Unterdruckkammer (20) und eine Arbeitskammer (23) dichtend unterteilt ist, wobei die bewegliche Wand (50) durch einen metallischen Membranteller (19) und eine daran anliegende Rollmembran (18) gebildet ist, sowie mit einem mechanisch betätigbaren Steuerventil (1,9,12) zur Verbindung der Arbeitskammer (23) mit der Unterdruckkammer (20) bzw. mit der Atmosphäre, dessen axial bewegliches Steuerventilgehäuse (10) aus thermoplastischem Kunststoff ausgebildet ist und eine Abstützfläche (35) für den radial innenliegenden Bereich des Membrantellers sowie eine radiale Nut (27) aufweist, die den radial innenliegenden Bereich der Rollmembran (18) aufnimmt, dadurch **gekennzeichnet**, daß der radial innenliegende Bereich des Membrantellers (19) ein ringförmige Wölbung (34) aufweist, wobei sowohl die Kontur der Abstützfläche (35) als auch die des radial innenliegenden Bereiches (Dichtwulst (42)) des Rollmembran (18) der Wölbung (34) des Membrantellers (19) entspricht und daß die Nut (27) mit ihrer axialen Abmessung sich in den Auflagbereich des Membrantellers (19) auf der Abstützfläche (35) hinein erstreckt.

2. Unterdruck-Bremskraftverstärker nach Anspruch 1, dadurch **gekennzeichnet**, daß die Nut (27) in ihrem unterhalb der Abstützfläche (35) des Membrantellers (19) liegenden Bereich eine im Querschnitt kreissegmentförmige Krümmung (43) aufweist, die mit einer im radial innenliegenden Bereich der Rollmembran (18) ausgebildeten Wölbung (44) zusammenwirkt.

3. Unterdruck-Bremskraftverstärker nach Anspruch 1, dadurch **gekennzeichnet**, daß der radial innenliegende Bereich der Rollmembran (18) durch einen axial abstehenden ringförmigen Kragen (46) gebildet ist, der im wesentlichen die gleiche Materialdicke wie der am Membranteller (19) anliegende Teil der Rollmenbran (18) aufweist und an seiner dem Membranteller (19) abgewandten Seite einen radialen Bund (52) aufweist, wobei ein Halteelement (47) vorgesehen ist, das eine auf den Kragen (46) radial wirkende Kraft aufbringt.

4. Unterdruck-Bremskraftverstärker nach Anspruch 3, dadurch **gekennzeichnet**, daß das Halteelement (47) zwischen den Bund (52) und dem am innenliegenden Bereich des Membrantellers (19) anliegenden Abschnitt (45) der Rollmembran (18) angeordnet ist.

5. Unterdruck-Bremskraftverstärker nach Anspruch 3 oder 4, dadurch **gekennzeichnet**, daß das Halteelement (47) durch einen geschlitzten Ring (49) gebildet ist.

6. Unterdruck-Bremskraftverstärker nach Anspruch 5, dadurch **gekennzeichnet**, daß der Ring (49) aus Metall besteht.

7. Unterdruck-Bremskraftverstärker nach Anspruch 5, dadurch **gekennzeichnet**, daß der Ring (49) aus Kunststoff besteht.

8. Unterdruck-Bremskraftverstärker nach Anspruch 3 oder 4, dadurch **gekennzeichnet**, daß das Halteelement (47) durch einen Gummiring (51) gebildet ist.

9. Unterdruck-Bremskraftverstärker nach Anspruch 8, dadurch **gekennzeichnet**, daß der Gummiring (51) an die Rollmembran (18) einteilig angegossen ist.

10. Unterdruck-Bremskraftverstärker nach Anspruch 3 oder 4, dadurch **gekennzeichnet**, daß das Halteelement (47) durch eine Wurmfeder (48) gebildet ist.

11. Unterdruck-Bremskraftverstärker nach einem der Ansprüche 5 bis 9, dadurch **gekennzeichnet**, daß der Ring (49) bzw. der Gummiring (51) im Querschnitt polygonförmig ausgebildet ist.

12. Unterdruck-Bremskraftverstärker nach einem der Ansprüche 5 bis 9, dadurch **gekennzeichnet**, daß der Ring (49) bzw. der Gummiring (51) einen kreis- oder ovalförmigen Querschnitt aufweist.

## Claims

1. A vacuum brake force booster for automotive vehicles, comprising a vacuum housing which, through an axially movable partition (50) to which pneumatic differential pressure can be applied, is sealingly subdivided into a vacuum chamber (20) and a working chamber (23), with the movable partition (50) being formed by a metal diaphragm plate (19) and a rolling diaphragm (18) abutting thereon, and comprising a mechanically operable control valve (1, 9, 12) for establishing a communication between the working chamber (23) and the vacuum chamber (20) or the atmosphere, respectively, the axially movable control housing (10) of which is formed of a thermoplastic material and comprises a support face (35) for the radially inward area of the diaphragm plate and a radial groove (27) to accommodate the radially inward area of the rolling diaphragm (18),
characterized in that the radially inward area of the diaphragm plate (19) has an annular curvature, both the contour of the support face (35) and that of the radially inward area (sealing bead (42)) of the rolling diaphragm (18) corresponding to the curvature (34) of the diaphragm plate (19), and in that the groove (27) with its axial dimensions extends into the bearing area of the diaphragm plate (19) on the support face (35).

2. A vacuum brake force booster according to claim 1, characterized in that the groove (27), in the area thereof below the support face (35) of the diaphragm plate (19) exhibits a curvature (43) which, in cross-section, is of a circular segment-type configuration and cooperates with a curvature (44) formed in the radially inward area of the rolling diaphragm (18).

3. A vacuum brake force booster according to claim 1, characterized in that the radially inward area of the rolling diaphragm (18) is formed by an axially projecting annular collar (46) being substantially of the same material thickness as the portion of the rolling diaphragm (18) in abutment with the diaphragm plate (19) and exhibiting, on the side thereof facing away from the diaphragm plate (19), a radial shoulder (52), with a holding element (47) being provided which applies a radially acting force to the collar (46).

4. A vacuum brake force booster according to claim 3, characterized in that the holding element (47) is disposed between the shoulder (52) and the section (45) of the rolling diaphragm (18) in abutment with the inward area of the diaphragm plate (19).

5. A vacuum brake force booster according to claims: 3 or 4, characterized in that the holding element (47) is formed by a slitted ring (49).

6. A vacuum brake force booster according to claim 5, characterized in that the ring (49) is made of metal.

7. A vacuum brake force booster according to claim 5, characterized in that the ring (49) is made of plastic material.

8. A vacuum brake force booster according to claims 3 or 4, characterized in that the holding element (47) is formed by a rubber ring (51).

9. A vacuum brake force booster according to claim 8, characterized in that the rubber ring (51) is integrally cast on the rolling diaphragm (18).

10. A vacuum brake force booster according to claims 3 or 4, characterized in that the holding element (47) is formed by a worm-type spring (48).

11. A vacuum brake force booster according to any one of claims 5 to 9,
characterized in that the ring (49) and the rubber ring (51), respectively, in cross-section, is of a polygonic configuration.

12. A vacuum brake force booster according to any one of claims 5 to 9,
characterized in that the ring (49) and the rubber ring (51), respectively, is of a circular or oval cross-section.

## Revendications

1. Amplificateur d'effort de freinage à dépression, pour véhicule automobile, comprenant, d'une part, un boîtier à dépression, qui est divisé d'une manière étanche, par une paroi (50) mobile axialement et agencée de façon a pouvoir être soumise à l'action d'une pression différentielle pneumatique, en une chambre à dépression (20) et une chambre de travail (23), la paroi mobile (50) étant constituée d'un plateau à membrane (19) métallique et d'une membrane (18) à déroulement appliquée sur ce plateau, et, d'autre part, une valve de commande (1, 9, 12) qui est agencée de façon à pouvoir être actionnée mécaniquement et sert à relier la chambre de travail (23) à la chambre à dépression (20) ou à l'atmosphère et dont un boîtier (10), mobile axialement, est réalisé en matière thermoplastique et comporte une surface (35) d'appui de la zone radialement intérieure du plateau à membrane, ainsi qu'une gorge radiale (27) qui sert à recevoir la zone radialement intérieure de la membrane (18) à déroulement, caractérisé en ce que la zone radialement intérieure du plateau à membrane (19) comporte une partie annulaire incurvée (34), le contour de la surface d'appui (35) et celui de la zone radialement intérieure (talon d'étanchéité (42)) de la membrane annulaire (18) correspondant l'un et l'autre à celui de la partie arrondie (34) du plateau à membrane (19), et en ce que, suivant sa dimension axiale, la gorge (27) s'étend dans la zone d'appui du plateau à membrane (19) sur la surface d'appui (35).

2. Amplificateur d'effort de freinage à dépression suivant la revendication 1, caractérisé en ce que, dans sa zone qui est située au-dessous de la surface (35) d'appui du plateau à membrane (19), la gorge (27) comporte une partie incurvée (43), à section transversale en arc de cercle, qui coopère avec une partie arrondie (44) réalisée dans la zone radialement intérieure de la membrane à déroulement (18).

3. Amplificateur d'effort de freinage à dépression suivant la revendication 1, caractérisé en ce que la zone radialement intérieure de la membrane à déroulement (18) est formée d'un collet annulaire (46), en saillie axiale, qui a pratiquement la même épaisseur de matière que la partie de la membrane à déroulement (18) prenant appui sur le plateau à membrane (19) et qui comporte une collerette radiale (52) sur sa face tournée vers le plateau à membrane (19), tandis qu'il est prévu un élément de maintien (47) qui exerce sur le collet (46) une force s'exerçant radialement.

4. Amplificateur d'effort de freinage à dépression suivant la revendication 3, caractérisé en ce que l'élément de maintien (47) est disposé entre la collerette (52) et la section (45) de la membrane à déroulement (18) qui prend appui sur la zone intérieure du plateau à membrane (19).

5. Amplificateur d'effort de freinage à dépression suivant l'une des revendications 3 et 4, caractérisé en ce que l'élément de maintien (47) est constitué d'un anneau fendu (49).

6. Amplificateur d'effort de freinage à dépression suivant la revendication 5, caractérisé en ce que l'anneau (49) est en métal.

7. Amplificateur d'effort de freinage à dépression suivant la revendication 5, caractérisé en ce que l'anneau (49) est en matière plastique.

8. Amplificateur d'effort de freinage à dépression suivant l'une des revendications 3 et 4, caractérisé en ce que l'élément de maintien (47) est constitué d'une bague en caoutchouc (51).

9. Amplificateur d'effort de freinage à dépression suivant la revendication 8, caractérisé en ce que la bague en caoutchouc (51) est réalisée d'une pièce au moulage sur la membrane à déroulement (18).

10. Amplificateur d'effort de freinage à dépression suivant l'une des revendications 3 et 4, caractérisé en ce que l'élément de maintien (47) est constitué d'un ressort hélicoïdal (48).

11. Amplificateur d'effort de freinage à dépression suivant l'une des revendications 5 à 9, caractérisé en ce que l'anneau (49) ou la bague en caoutchouc (51) a une forme polygonale en section transversale.

12. Amplificateur d'effort de freinage à dépression suivant l'une des revendications 5 à 9, caractérisé en ce que l'anneau (49) ou la bague en caoutchouc (51) a une forme circulaire ou ovale en section transversale.
